# EUROPEAN PATENT APPLICATION

(11) **EP 1 447 306 A2**
(43) Date of publication of application: **18.08.2004**
(21) Application number: 04445009.6
(22) Date of filing: 05.02.2004
(51) Int. Cl.: B62D 5/04, B66F 9/075, B62D 6/00

(54) **Servo steering for tiller truck**

(30) Priority: 06.02.2003 SE 0300307; 06.02.2003 SE 0300308
(71) Applicant: BT Industries, S-59581 Mjölby (SE)
(72) Inventor: Stenberg, Kurt-Ove, Mjölby (SE); Lundén, Mats, Mjölby (SE); Vikman, Leif, Mjölby (SE)
(74) Representative: Berglund, Erik Wilhelm

(57) **Abstract**

Tiller truck provided with a brushless motor (10) for the servo steering. The internal position defining pulses from the motor are counted in order to give a measure of the steering position of the steered wheel. A reference sensor (1) is used to define one position. The steering further shifts between speed servo mode and position servo mode, depending on travel speed or turning speed of the steering wheel.

## Description

At trucks it is known to arrange a servo steering without mechanical coupling between a control means in the shape of a steering wheel or the like and the steered wheel of the truck (steer by wire). At this it is desirable to use a position servo for the control of the driving wheel, that is with the steering wheel or other control means the intended steering angle of the driving wheel is defined.

Position steering provides in particular a possibility to balance the steering influencing forces caused by the drive force transfer. If the driver steers straight forward the truck goes straight forward, he does not have to sit and compensate in any way.

At steering means according to the position servo principle where no mechanical contact exist between steering wheel and steer control (steer by wire) the steering movements of the driver may become faster than the maximally allowed or possible rotation speed of the servo motor. This means that the driver easily pass the control position corresponding to the position he wants to achieve for the driven and steered wheel. This then means that the wheel continue its steering movement after the driver has stopped his steering movement, which can result in the wheel being turned too much and that the driver has to correct this with a return movement. This correcting back and forth means not only a discomfort and additional work for the driver but may also influence the stability of goods or truck.

In view of the above problems the object of the invention is to eliminate the drawbacks resulting from the use of position servo, but with a retaining of its advantages.

In accordance with the invention this object can be solved by the steering being so arranged that when for instance the steering wheel rotate faster than the maximally allowed corresponding pivot speed of the servo the steering ceases working in position servo mode and starts to work as so called speed servo, that is the speed with which the steering wheel is turned instead of a position indicates the desired speed in the pivot or turning movement. When the driver feels that he is on the right course he stops spinning the steering wheel and the turning of the steered wheel ends and the system can return to position steering. The limit value of the speed of the steering wheel or control movement at which the truck change from being position servo controlled to speed servo controlled (at increasing steering wheel speed) need not to be the same as the highest speed of the steering servo but may be lower, depending on what will provide the best safety or comfort for the driver.

Nor do the speed limits of the travel speed of the truck or the steering wheel speed at which changes take place from one servo mode to the other need to be the same at increasing speed as at speed reduction.

One can within the frame of the inventive thought also consider the switch between position servo and speed servo being controlled by the travel speed of the truck, for instance one can consider position servo being used at high speeds, that is when the truck travels long distances where one wish it to go precise and straight. At lower speeds as at maneuvering in or out of shelfs with load instead a speed servo mode may be used, this in particular since these drivers today are used to have it in this way since speed servo is the most usual today.

At very slow maneuvering, as when the truck is to start, it may likewise be of advantage that the steering is in position servo mode.

Advantageously the shifting between position servo mode and speed servo mode may be controlled both by the truck speed and the control or steering wheel speed as well as by other parameters, as for instance load and lift height. One can also consider different drivers wanting different parameter settings.

In a further embodiment of the invention the desired result is achieved by limiting the deviation between is-value and target-value.

For a position servo each position of the control means corresponds to a respective position of the steered wheel. If the driver spins the steering wheel faster than the servo can cope with the difference between the corresponding positions become large and a disturbing delay result as has been described above. By however limiting the delay between target value, that is the steering wheel position and the is-value, that is the steered wheel angle the disadvantages disappear. This limiting may for instance be achieved by correcting the difference between is-value and target value through subtraction or adding with a measure reducing the difference to such a level that the delay is not disturbing and perhaps not even noticed. If similar detection is used for steering servo and steering wheel it is only necessary to look at the difference measured in the number of pulses.

As long as the driver steers so slow that the deviation between is-value and target value is less than a given angle the servo works as a conventional position servo with a delay so small that it is hardly noticed. If the driver executes a movement with the steering wheel that is so fast that the deviation becomes larger than the given angle the registered and thereby to the motor controlling part of the servo control delivered target value plus the maximally allowed angle deviation. When the driver stops rapidly spinning the wheel the deviation between the real is- and target values is reduced so that it gets within the given angle and the servo functions entirely as a non-manipulated position servo. If the rapid movement suddenly stops also the movement stops very fast corresponding to the given limited angle between is-value and target value.

If so desired one can also allow the maximally allowed deviation to diminish with the speed of the truck or in some other way be a function of the speed of the truck, or some other parameter, as for instance the size of the load, lifting height, steering angle etc.

Since the steering movements executed by the driver does not stop abruptly, among other things due to the weight of the drivers hand etc the driver will probably never notice any discontinuities. However a certain position of the steering wheel will no longer correspond to a certain steering angle since this can be altered at fast steering wheel movements. As long as the driver does not spin the steering wheel too fast proportionality will exist between is- and target value. That is a certain angle for the steering wheel will each time result in the same angle for the steered wheel.

In the above described case the limitation of the deviation between is- and target value can be executed entirely by software. The limitation can however also be made by hardware or even by applying a braking torque to the steering wheel that is braked by means of a motor in order to keep the deviation between is- and target value within a given measure so that the driver can not spin the steering wheel faster than corresponding to the permitted angle difference. The decided maximal deviation can be dimensioned so that it corresponds to the maximum speed of the control servo for changing steering angle.

One can also consider to indicate for the driver, for instance with a light emitting diode, when he spins quicker or faster than what the servo can cope with, that is when he spins unnecessarily.

At the above steering devices it is preferred with an exact position sensor for the steering angle, that is the pivot angle of the wheel. Since this is precision demanding it has until now meant a considerable increase in cost that normally has not been supportable by smaller trucks that therefor have not been provided with position servo even if this had been desirable.

The object of the invention is therefor also to enable the equipping of smaller trucks with position servo steering by achieving a simple reliable and exact position sensing for the steering at a low cost.

In accordance with the invention this object is solved by the steering servo comprising a brushless machine or motor of the type that contains sensors for the rotor position. These sensors are via a control unit used to control the rotating field that is generated in a stator in the motor to turn the rotor of the motor in the direction of rotation. The signals from these sensors are in accordance with the invention used as a measure of the rotation. Since the rotor rotates many revolutions at the achieving of a comparative small steering angle change for the driving wheel the use of such a machine and its anyhow existing sensors eliminates the cost of an additional steering angle sensor. By the use of this type of motor also other advantages for instance reduced maintenance and fouling are achieved since no brushes have to be changed.

Even if the number of pulses only correspond to an exact change of angle for the steered wheel and not an exact position for this, this is of little importance since the steering wheel or other control means does not have a defined position corresponding to straight forward. One does thus not know the exact direction but it is sufficient to know the changes in angle when steering.

These types of motors (induction motors, permanent magnet rotors, asynchronous motors of AC-type as well as DC-type) normally include three sensors located in an appropriate manner so that they together with the poles of the rotor give a number of signal pulses per steering revolution and this enables a very exact measure of the existing steering angle change.

The turning of existing control means, for instance a steering wheel defines exactly how much the wheel is to be steered in one or the other direction and turning is continued until a corresponding number of pulses have been counted.

At some trucks the steered driving wheel can be pivoted freely that is more than 360°, and with retained drive direction of the motor. Here it is not enough to know the steering angle changes, but one also want to know the direction, that can be indicated with a suitable instrument.

If one furthermore want the steering means to have a defined position in relation to a defined angle position of the steering wheel, for instance the position for driving straight forward the steering control and the measuring of the steering angle of the wheel must be zeroed and correlated. This can for the steering position sensing be done by in addition to the sensing signals in the motor arranging an external sensing that serve as reference. The pulses are then in principle counted from this reference point. This extra sensor may be arranged in a suitable place and of in principle any kind at all provided that the accuracy is sufficient.

The position sensing in accordance with the invention is below described in more detail with reference to an enclosed drawing that schematically show a drive unit of a truck provided with a position sensing in accordance with the invention.

The drive unit includes a wheel 7, a transmission 9 and a drive motor 10. In order to steer, that is turn the drive unit a steering servo motor 3 is arranged that via a steering gear 4 and a small cogwheel 6 can work on a larger cogwheel 5, that is non-turnably fastened to the drive unit. The servo motor is further provided with a an electronic unit 8 to which is connected a sensor, not shown, for instance in the shape of a steering wheel with position or angle sensor.

A reference sensor 1 fastened in the truck frame senses the position of a cam profile that is arranged fixed on the big cogwheel 5. The reference sensor 1 can for instance detect when the cam profile has reached a certain height. Initially, that is after fabrication or when the truck has been out of power a steering movement is carried out so that the intended reference position of the cam profile in relation to the reference detector is achieved or passed. When the reference position is passed the counting of pulses from a pulse emitter integrated in the servo motor is set to zero and the system is calibrated, in the electronic unit furthermore the exact number of servo motor pulses from the reference position to for instance the position straight forward may be counted etc. The reference detector may also start from if its value, (distance to the cam) is being reduced or increased in order to know in which direction turning takes place. One can also use the point where the measured value of the reference detector change derivative, that is start to fall from previously having increased or vise versa.

For instance a permanently magnetized synchronous machine with 2 or 3 pair of poles deliver 12 or 18 pulses per motor revolution to its control unit. This together with the gear reduction of the steering gear 4 and the cogs 5 and 6 provide a sufficiently good resolution for the position accuracy of the steered wheel.

The signals obtained from the inner position detectors can within the scope of the inventive thought be considered to be replaced with signals or data of the rotational position of the motor obtained in other ways, for instance calculated from measured instantaneous current and/or voltage values.

In addition to the invention enabling a position indication with few components it also has the advantage that it to a great part is based on software, which allows considerably simpler adjustment since this can be made entirely in software.

If so should be desired the truck can be programmed after a loss of electric power automatically to conduct a calibration through a turning of the transmission unit so that the reference position is achieved. Calibration can also take place every time that the reference detector is passed, which reduce the risk of electrical interference giving erroneous calculations and settings.

Within the frame of the inventive thought one may consider combining the different ways to shift between position servo mode and speed servo mode or position mode with limited deviation between is- and target value in order to achieve a safe and comfortable servo steering.

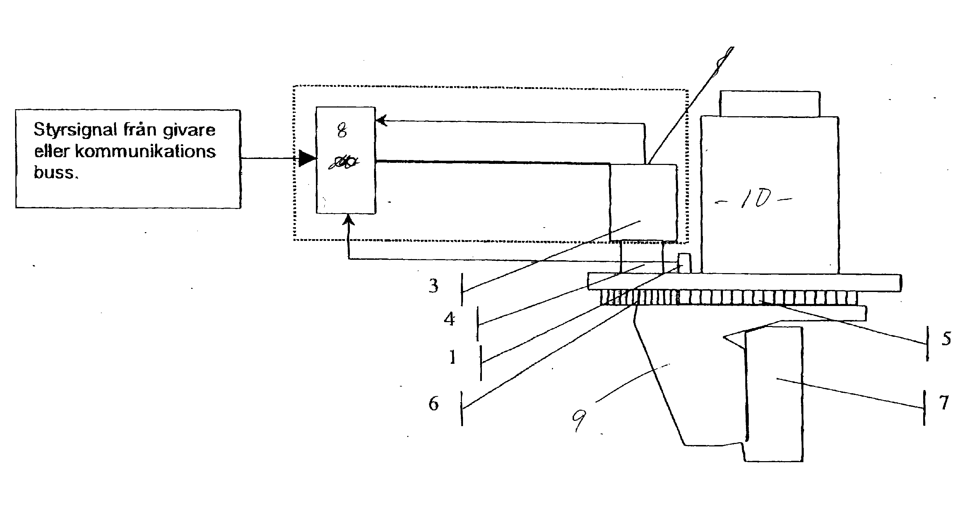

## Claims

1. Servo steering for truck, **characterized in that** it is arranged or programmed in a first drive mode to function as a position servo, while in a second drive mode to function as a speed servo.

2. Servo steering for truck according to claim 1, **characterized in that** the first drive mode is entered when the drive speed of the truck increase over a defined first upper limit value while the second drive mode is entered when the drive speed of the truck falls below a defined second upper limit value.

3. Servo steering according to claim 2 or 3, **characterized in that** the first and the second of the upper limit values are the same.

4. Servo steering according to any of the preceding claims, **characterized in that** when the turning speed of the steering control or the steering wheel of the truck increase over a defined first limit value the steering is switched from the first drive mode to the second while when the turning speed of the steering control or steering wheel falls below a defined second limit value the steering servo shift from the second drive mode to the first drive mode.

5. Servo steering according to any of the preceding claims, **characterized in that** the first drive mode is present at speeds of the truck below a certain lower limit value.

6. Servo steering according to claim 4, **characterized in that** the highest of the limit values (first or second) corresponds to the maximum speed of the steering servo motor.

7. Servo steering of position type **characterized in that** the deviation between is-value and target value is limited.

8. Servo steering according to claim 7, **characterized in that** the deviation between is- and target value is limited in software.

9. Servo steering according to claim 7, **characterized in that** the deviation between is- and target value is limited by hardware.

10. Servo steering according to claim 7, **characterized in that** the deviation is limited by a braking of the steering wheel movement so that the steering wheel can not be turned faster than corresponding to the maximum turning speed of the servo steering.

11. Servo steering, **characterized in that** it includes a servo motor that is a brushless machine or motor (3) of the type that for its own control includes inner position detectors for the sensing of the angle position of the rotor in the machine and that signal pulses from these detectors are added or subtracted according to the turning so that the sum may serve as an angle value of the present angle position or the angle change of the steering.

12. Device according to claim 11, **characterized in that** at starting from a power free condition, for instance at battery exchange the driver at start push a button alternatively a computer unit note angle position of steering wheel and steered wheel so that these serve as starting position from which counting can take place.

13. Device according to claim 11, or 12, **characterized in that** a reference detector is arranged to indicate when a defined position is present, from which pulse counting then take place.
